(19) Europäisches Patentamt
European Patent Office
Office européen des brevets

(11) **EP 4 251 969 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **21802296.0**

(22) Anmeldetag: **28.10.2021**

(51) Internationale Patentklassifikation (IPC):
**G01N 9/00** *(2006.01)*    **G01N 11/16** *(2006.01)*
**G01F 1/84** *(2006.01)*    **G01F 15/02** *(2006.01)*

(52) Gemeinsame Patentklassifikation (CPC):
**G01N 11/16; G01F 1/8436; G01F 15/024; G01N 9/002;** G01N 2009/006

(86) Internationale Anmeldenummer:
**PCT/EP2021/080029**

(87) Internationale Veröffentlichungsnummer:
**WO 2022/111944 (02.06.2022 Gazette 2022/22)**

(54) **VERFAHREN UND MESSGERÄT ZUR BESTIMMUNG EINES VISKOSITÄTSMESSWERTS SOWIE VERFAHREN UND MESSANORDNUNG ZUM BESTIMMEN EINES DURCHFLUSSMESSWERTS**

METHOD AND MEASURING DEVICE FOR DETERMINING A VISCOSITY MEASUREMENT VALUE, AND METHOD AND MEASURING ASSEMBLY FOR DETERMINING A FLOW MEASUREMENT VALUE

PROCÉDÉ ET DISPOSITIF DE MESURE POUR DÉTERMINER UNE VALEUR DE MESURE DE VISCOSITÉ, ET PROCÉDÉ ET ENSEMBLE DE MESURE POUR DÉTERMINER UNE VALEUR DE MESURE DE DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2020 DE 102020131459**

(43) Veröffentlichungstag der Anmeldung:
**04.10.2023 Patentblatt 2023/40**

(73) Patentinhaber: **Endress+Hauser Flowtec AG**
**4153 Reinach (CH)**

(72) Erfinder: **RIEDER, Alfred**
**84032 Landshut (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
WO-A1-2018/208301    WO-A1-2020/108910
WO-A2-2005/095901    US-A1- 2005 229 719

EP 4 251 969 B1

**Beschreibung**

Die vorliegende Erfindung betrifft ein Verfahren und ein Messgerät zur Bestimmung eines Viskositätsmesswerts sowie ein Verfahren und eine Messanordnung zum Bestimmen eines Durchflussmesswerts.

Grundsätzlich ist es bekannt, die Viskosität eines in einem schwingfähigen Messrohr geführten Mediums anhand der Dämpfung der Messrohrschwingungen zu bestimmen, beispielsweise anhand des Verhältnisses von Erregerstrom und damit erzielter Schwingungsamplitude bei der Resonanzfrequenz einer mit dem Erreger angeregten Schwingungsmode. Dann ist der medienspezifische Anteil der Dämpfung zu identifizieren, um auf dessen Basis die Viskosität zu ermitteln. Die Viskositätsmessung mittels der Schwingungsdämpfung von Messrohren ist unter anderem beschrieben in US 7,059,176 B2, DE 100 20 606 A1 und DE 10 2017 116 515 A1. US 2005/0229719 A1, WO 2018/208301 A1, WO 2020/108910 A1 und WO 2005/095901 offenbaren weitere herkömmlichen Messverfahren.

Bei Viskositäten von mehr als 100 cP führt die skizzierte Vorgehensweise zu zufriedenstellenden Resultaten. Bei geringeren Viskositäten sind jedoch deutliche Abweichungen der solchermaßen ermittelten Messwerte von Referenzwerten für die Viskosität des Mediums zu beobachten. Dies ist auch insofern unbefriedigend, als die Viskositätsmesswerte zur Reynoldszahlkorrektur bei der Durchflussmessung herangezogen werden, und es vorteilhaft wäre, anhand der Schwingungsdämpfung eines Messrohres, das insbesondere auch zur Durchflussmessung dient, auch für Viskositäten unter 100 cP insbesondere unter 10 cP noch valide Viskositätsmesswerte zu bestimmen, die eine genaue Reynoldszahlkorrektur ermöglichen. Es ist die Aufgabe der vorliegenden Erfindung, hier Abhilfe zu schaffen.

Das erfindungsgemäße Verfahren zum Bestimmen eines Viskositätsmesswerts eines in einem schwingfähigen Messrohr geführten Mediums umfasst: Anregen mindestens einer Schwingungsmode des Messrohrs; Ermitteln einer Eigenfrequenz der Schwingungsmode; Ermitteln der Dichte des Mediums auf Basis der Eigenfrequenz; Ermitteln der Dämpfung der Schwingungsmode; Ermitteln des Viskositätsmesswerts in Abhängigkeit von der Dichte, der Eigenfrequenz und der Dämpfung der Schwingungsmode, wobei erfindungsgemäß der Viskositätsmesswert in Abhängigkeit von einer Spezifizierung der Art des Mediums mit einem der Spezifizierung entsprechenden Modell ermittelt wird.

Erfindungsgemäß wird also bei der Bestimmung der Viskosität anhand einer Spezifizierung des Mediums berücksichtigt, um welche Art von Medium es sich handelt, hierbei kann ggf. die chemische Zusammensetzung des Mediums zu dessen Spezifizierung herangezogen werden, wobei das der Spezifizierung entsprechende Modell zur Bestimmung des Viskositätsmesswerts, anhand von Medien gleicher oder ähnlicher chemischer Zusammensetzung entwickelt ist.

Erfindungsgemäß umfasst die Identifizierung die Zuordnung des Mediums zu einer Stoffgruppe, wobei das Modell ein stoffgruppenspezifisches Modell umfasst. Diese Weiterbildung vereinfacht das Verfahren gegenüber Ausgestaltungen mit jeweils einer Modellentwicklung für eine Vielzahl chemischer Zusammensetzungen.

Erfindungsgemäß sind die mit einem ersten Modell für eine erste Stoffgruppe ermittelten Viskositätsmesswerte um mindestens 20%, insbesondere um mindestens 40% größer als die mit einem zweiten Modell ermittelten Viskositätsmesswerte für eine zweite Stoffgruppe, wenn die mit dem zweiten Modell ermittelten Viskositätsmesswerte nicht mehr als 10 cP betragen.

Das erste und das zweite Modell können beispielsweise eine identische Übertragungsfunktion aufweisen, die sich zwischen den Modellen nur in ihren Koeffizienten unterscheidet, es können aber auch grundsätzlich verschiedene Übertragungsfunktionen verwendet werden.

Gemäß einer Weiterbildung der Erfindung weisen das erste Modell und das zweite Modell jeweils eine Übertragungsfunktion auf zum Ermitteln des Viskositätsmesswerts in Abhängigkeit von der Dämpfung und der Eigenfrequenz der Schwingungsmode sowie der Dichte des Mediums, wobei die erste und die zweite Übertragungsfunktion jeweils einen Grunddämpfungsterm aufweisen, wobei die ermittelte Dämpfung mit dem Grunddämpfungsterm zu korrigieren ist, um einen medienspezifischen Dämpfungswert zu ermitteln, wobei sich ein erster Grunddämpfungsterm für die erste Übertragungsfunktion von einem zweiten Grunddämpfungsterm für die zweite Übertragungsfunktion unterscheidet.

Der Grunddämpfungsterm beschreibt die Dämpfung der Messrohschwingungen für gegen Null gehende Viskositäten. Für einen Messaufnehmertyp oder für einen individuellen Messaufnehmer wird für jede der Übertragungsfunktionen ein stoffgruppenspezifischer Grunddämpfungswert mit einem hinreichend niederviskosen Medium aus der Stoffgruppe ermittelt. Nach dem Stand der Technik wurde ein Grunddämpfungswert stoffgruppenunabhängig durch Extrapolation von viskositätsabhängigen Dämpfungswerten zu niedrigen Viskositäten ermittelt. Im Zusammenhang mit Untersuchungen zur vorliegenden Erfindung hat sich gezeigt, dass diese Vorgehensweise bei Viskositäten unter etwa 10 cP nicht zielführend ist. Deshalb schlägt die Erfindung vor, stoffspezifische bzw. stoffgruppenspezifische Grunddämpfungswerte zu ermitteln.

Gemäß einer Weiterbildung der Erfindung weist die erste Übertragungsfunktion für das erste Modell einen ersten Empfindlichkeitsfaktor $A_{11}$ auf, der von einem zweiten Empfindlichkeitsfaktor $A_{12}$ der zweiten Übertragungsfunktion für das zweite Modell abweicht, wobei der ermittelte Viskositätsmesswert jeweils proportional ist zu dem Empfindlichkeitsfaktor.

Gemäß einer Weiterbildung der Erfindung hängt der ermittelte Viskositätsmesswert vom Quadrat des medienspezifischen Dämpfungswerts ab, und ist insbesondere proportional zum Quadrat der medienspezifischen Dämpfungswerts.

Gemäß einer Weiterbildung der Erfindung weist der Grunddämpfungsterm ein Produkt eines Grunddämpfungsfaktors $A_{0i}$ und eines Dichtekorrekturterms aufweist, wobei der Grunddämpfungsfaktor $A_{0i}$ der ersten Übertragungsfunktion von dem Grunddämpfungsfaktor der zweiten Übertragungsfunktion abweicht.

Gemäß einer Weiterbildung der Erfindung weist der Dichtekorrekturterm eine Funktion einer Abweichung der ermittelten Dichte des Mediums von einer Referenzdichte auf.

Gemäß einer Weiterbildung der Erfindung ist der Dichtekorrekturterm für das erste Modell und das zweite Modell identisch.

Gemäß einer Weiterbildung der Erfindung weichen die mit den Übertragungsfunktionen ermittelten stoffgruppenspezifischen Viskositätsmesswerte für Viskositäten zwischen 90 cP und 110 cP um nicht mehr als 10% von Kontrollviskositätsmesswerten ab, die mit den folgenden stoffgruppenspezifischen Kontrollübertragungsfunktionen ermittelt sind, wobei die mit den Übertragungsfunktionen ermittelten stoffgruppenspezifischen Viskositätsmesswerte für Viskositäten zwischen 1 cP und 90, cP um nicht mehr als 50% von Kontrollviskositätsmesswerten abweichen, die mit den folgenden stoffgruppenspezifischen Kontrollübertragungsfunktionen ermittelt sind:

$$\eta = \frac{A_{1i}}{f^3\,\rho}\left(D - A_{0i}\left(1 - A_{2i}\left(\rho - \rho_{ref}\right)\right)\right)^2$$

wobei $A_{0i}$ der stoffgruppenabhängiger Grunddämpfungsfaktor ist, der sich zwischen der ersten und zweiten Kontrollübertragungsfunktion unterscheidet,

wobei $A_{1i}$ der stoffgruppenabhängige Empfindlichkeitsfaktor ist, der sich zwischen der ersten Kontrollübertragungsfunktion und der zweiten Kontrollübertragungsfunktion unterscheidet,

wobei $A_{2i}$ ein Gewichtungsfaktor ist, um einen Einfluss der Dichte auf die Dämpfung zu modellieren, wobei $\rho$ die bestimmte Dichte des Mediums und $\rho_{ref}$ eine Referenzdichte sind,

wobei D die ermittelte Dämpfung ist, und

wobei f die Frequenz der angeregten Biegeschwingungsmode bezeichnet.

In einer Weiterbildung der Erfindung ist $\rho_{ref}$ für beide Kontrollübertragungsfunktionen gleich.

In einer Weiterbildung der Erfindung ist $A_{2i}$ für beide Kontrollübertragungsfunktionen gleich.

Gemäß einer Weiterbildung der Erfindung ist die Referenzdichte $\rho_{ref}$ für beide Übertragungsfunktionen gleich, wobei insbesondere der Koeffizient $A_{2i}$ des Dichtekorrekturterms für beide Übertragungsfunktionen gleich ist.

Die obigen Kontrollfunktionen sind offensichtlich geeignete Übertragungsfunktionen, um die gesuchten Viskositätsmesswerte auf Basis der genannten Eingangsgrößen zu berechnen, da sie den physikalischen Sachverhalt nachvollziehbar repräsentieren. Gleichwohl ist es möglich, die gesuchten Viskositätsmesswerte im genannten Viskositätsbereich auch mit anderen Funktionen in der angegebenen Genauigkeit zu approximieren. Formal andere mathematische Beschreibungen der erfindungsgemäßen, stoffspezifischen Modelle können daher ebenfalls zur Realisierung der Erfindung verwendet werden.

Das erfindungsgemäße Messgerät zum Bestimmen eines Viskositätsmesswerts eines Mediums umfasst: einen Messaufnehmer mit einem schwingfähigen Messrohr zum Führen des Mediums, einen Erreger zum Anregen mindestens einer Schwingungsmode des Messrohrs und einen Schwingungssensor zum Erfassen der Messrohrschwingungen; und eine Mess- und Betriebsschaltung mit einer Recheneinheit zum Treiben des Erregers und zum Erfassen von Signalen des Schwingungssensors; wobei die Mess- und Betriebsschaltung erfindungsgemäß dazu eingerichtet ist, das erfindungsgemäße Verfahren mit dem Messgerät durchzuführen.

Das erfindungsgemäße Verfahren zum Ermitteln eines Durchflussmesswerts eines strömenden Mediums, umfasst: Ermitteln eines vorläufigen Durchflussmesswerts; Ermitteln eines Viskositätsmesswerts des Mediums mittels des erfindungsgemäßen Verfahrens zum Ermitteln eines Viskositätsmesswerts; Ermitteln einer Reynoldszahl des Mediums auf Basis des vorläufigen Durchflussmesswerts, des Dichtemesswerts, und des Viskositätsmesswerts; und Ermitteln eines mit der Reynoldszahl korrigierten Durchflussmesswerts auf Basis des vorläufigen Durchflussmesswerts und der Reynoldszahl.

Die erfindungsgemäße Messstelle zum Ermitteln eines Durchflussmesswerts eines strömenden Mediums mittels des erfindungsgemäßen Verfahrens zum Ermitteln eines Durchflussmesswerts umfasst: ein Durchflussmessgerät zum Ermitteln eines vorläufigen Durchflussmesswerts und ein Messgerät nach Anspruch 12, welche miteinander funktionell verbunden sind, um die erforderlichen Daten zur Durchführung des Verfahrens auszutauschen.

Das erfindungsgemäße Coriolis-Massedurchflussmessgerät umfasst: mindestens ein Messrohr zum Führen eines Mediums; mindestens einen Erreger zum Anregen mindestens einer Schwingungsmode des Messrohrs; mindestens zwei Schwingungssensoren zum Erfassen von Messrohrschwingungen und einer durchflussabhängigen Verformung einer Schwingungsmode; eine Mess- und Betriebsschaltung mit einer Recheneinheit, die dazu eingerichtet ist, die erfindungsgemäßen Verfahren zum Ermitteln eines Viskositätsmesswerts und eines Durchflussmesswerts mit dem Coriolis-Massedurchflussmessgerät durchzuführen.

Die Erfindung wird nun anhand der in den Zeichnungen dargestellten Ausführungsbeispiele erläutert. Es zeigt:

Fig. 1: Abweichungen von Viskositätsmesswerten nach dem Stand der Technik von Referenzdaten für verschiedene Medien;

Fig. 2: ein Flussdiagramm für ein Ausführungsbeispiel des erfindungsgemäßen Verfahrens; und

Fig. 3: eine schematische Darstellung eines Ausführungsbeispiels einer erfindungsgemäßen Messstelle.

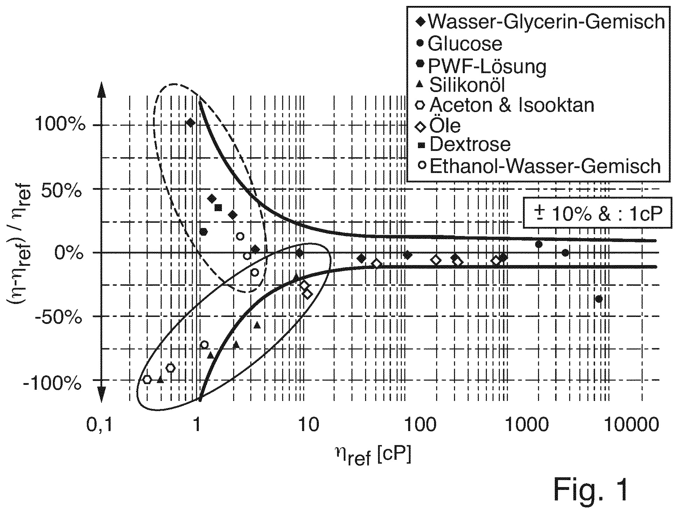

In Fig. 1 sind relative Abweichungen von nach dem Stand der Technik ermittelten Viskositätsmesswerten für verschiedene Medien über dem jeweiligen Referenzwert für die Viskosität der Medien aufgetragen. Die Viskositätsmesswerte wurden dabei auf Basis der Schwingungsdämpfung eines Messrohrs mit einem von der Medienart unabhängigen Modell ermittelt gemäß:

$$\eta = \frac{A_1}{f^3 \, \rho} \left( D - A_0 \left( 1 - A_2 \left( \rho - \rho_{ref} \right) \right) \right)^2 \qquad (I)$$

In der obigen Gleichung beschreiben die medienunabhängigen Koeffizienten $A_1$, $A_2$ und $A_0$ einen gerätespezifischen Empfindlichkeitsfaktor, einen Koeffizienten für einen Dichtekorrekturterm und eine Grunddämpfung, wobei $\rho$ und $\rho_{ref}$ einen Dichtewert des jeweiligen Mediums bzw. einen Referenzdichtewert, von insbesondere 1000 kg/m$^3$ bezeichnen. Die durchgezogenen Linien geben relative Abweichungen von $\pm$ 10 % vom jeweiligen Referenzwert der Viskosität einschließlich $\pm$ 1 cP an. Die Grunddämpfung $A_0$ ist hierbei mittels Regressionsrechnung auf Basis der beobachteten Dämpfungswerte und der Referenzviskositäten ermittelt. Hierbei ist mit abnehmender Viskosität zu erkennen, dass die medienunabhängige Grunddämpfung für Viskositäten unter 10 cP für einen ersten Teil der Medien zu groß und für einen zweiten Teil der Medien zu klein ist.

Erfindungsgemäß wird daher vorgeschlagen, die Art des Mediums bei der Ermittlung eines Viskositätsmesswerts zu berücksichtigen, indem beispielsweise für das Medium bzw. den Medientyp ein spezifisches Modell erstellt wird, welches den Zusammenhang zwischen Viskosität und Dämpfung beschreibt, oder indem das Medium bzw. der Medientyp einer Stoffgruppe zugeordnet wird, für die bereits ein Modell existiert, das den Zusammenhang zwischen Viskosität und Dämpfung mit hinreichender Genauigkeit beschreibt. Für einen Medientyp können beispielsweise für die obige Gleichung medientypspezifische Koeffizienten $A_{1m}$, $A_{2m}$ und $A_{0m}$ bestimmt werden, die dann zur Viskositätsbestimmung, insbesondere bei Viskositäten unterhalb von etwa 10 cP heranzuziehen sind. Unter einem Medientyp ist im vorliegenden Zusammenhang beispielweise ein binäres oder ggf. ternäres Gemisch zu verstehen, wobei die Viskosität vom Mischungsverhältnis der Mischungskomponenten abhängt. Beispielsweise lassen sich mit einem Gemisch von Wasser und Glycerin Viskositäten über einen Bereich von weniger als 1 cP bis 1000 cP darstellen, für die jeweils Dämpfungswerte ermittelt werden können. Auf Basis der Dämpfungswerte für die Gemische und den für die Gemische bekannten Referenzwerte für die Viskosität kann dann ein für den Medientyp Wasser-Glycerin spezifisches Modell aufgestellt werden, beispielsweise durch Ermitteln passender Koeffizienten $A_{1m}$, $A_{2m}$ und $A_{0m}$.

Ein weiteres Beispiel für einen Medientyp sind Stoffe deren Viskosität über das Molekulargewicht einstellbar ist, dies ist beispielsweise bei Silikonölen der Fall, für die Viskositätswerte von weniger als 10 cP bis über 10000 cP erreicht werden können. Die Vorgehensweise zum Aufstellen eines medientypspezifischen Modells für Silikonöle ist entsprechend zur zuvor beschriebenen Vorgehensweise bei Gemischen.

Dem Diagramm in Fig 1 ist weiterhin zu entnehmen, dass sich bei Viskositäten unter 10 cP die relativen Abweichungen der Viskositätsmesswerte von den Referenzwerten für die Viskosität in zwei Stoffgruppen zusammenfassen lassen, wie durch die Ellipsen in Fig. 1 angedeutet ist. Hierbei fasst die gestrichelte Ellipse solche Medien bzw. Medientypen zu einer ersten Stoffgruppe zusammen, für die der Viskositätsmesswert auf Basis der Dämpfung mit dem von der Medienart unabhängigen Modell nach Gleichung I zu groß ist. Für diese erste Stoffgruppe lassen sich Abweichungen mit einem ersten stoffgruppenspezifischen Modell erheblich reduzieren, bei dem ein größerer, erster stoffgruppenspezifischer Dämpfungsgrundwert $A_{01}$ verwendet wird. Weiterhin fasst die durchgezogene Ellipse solche Medien bzw. Medientypen zu einer zweiten Stoffgruppe zusammen, für die der Viskositätsmesswert auf Basis der Dämpfung mit dem von der Medienart unabhängigen Modell nach Gleichung I zu klein ist. Für diese zweite Stoffgruppe lassen sich Abweichungen mit einem zweiten stoffgruppenspezifischen Modell erheblich reduzieren, bei dem ein kleinerer, zweiter stoffgruppenspezifischer Dämpfungsgrundwert $A_{02}$ verwendet wird. Die genauen stoffgruppenspezifischen Dämpfungsgrundwerte lassen sich anhand der beobachteten Dämpfungswerte für die Medien einer Stoffgruppe beispielsweise mittels Regressionsrechnung ermitteln. Wenn nach Etablierung der Modelle noch nicht eingeordneter Medientyp zu analysieren ist, kann er im einfachsten Fall durch wenige Dämpfungsmessungen bei niedrigen Viskositäten, insbesondere unter 10 cP einer der Stoffgruppen zugeordnet werden. Die Ermittlung von Viskositätsmesswerten auf Basis der Dämpfung einer Messrohrschwingung mit einem stoffgruppenspezifischen Modell führt zu einer erheblich verbesserten Genauigkeit gegenüber dem Stand der Technik.

Im Messbetrieb werden daher erfindungsgemäße stoffgruppenspezifische Modelle bzw. deren Übertragungsfunktionen, beispielsweise in Form von

$$\eta = \frac{A_{1i}}{f^3 \rho}\left(D - A_{0i}\left(1 - A_{2i}\left(\rho - \rho_{ref}\right)\right)\right)^2 \qquad \text{(II)}$$

zur Berechnung der Viskositätsmesswerte eingesetzt.

Die erste Stoffgruppe umfasst beispielsweise die folgenden Medien bzw. Medientypen: Wasser-Glycerin-Gemische, Dextrose und Polywolframat-Wasser-Lösungen

Die zweite Stoffgruppe gehören beispielsweise die folgenden Medien bzw. Medientypen an: Ethanol-Wasser-Gemische, Aceton-Isooctan-Gemische und Siliconöle.

Zur Implementierung des erfindungsgemäßen Verfahrens, wird einer Recheneinheit einer Mess- und Betriebsschaltung mindestens ein medientypspezifisches Modell bzw. mindestens ein stoffgruppenspezifisches Modell bereitgestellt, sowie eine Information, welches Modell anzuwenden ist, was beispielsweise durch Eingeben des Medientyps erfolgen kann, wobei die Recheneinheit dazu eingerichtet ist, auf Basis hinterlegter Zuordnungen, ein passendes Modell auszuwählen.

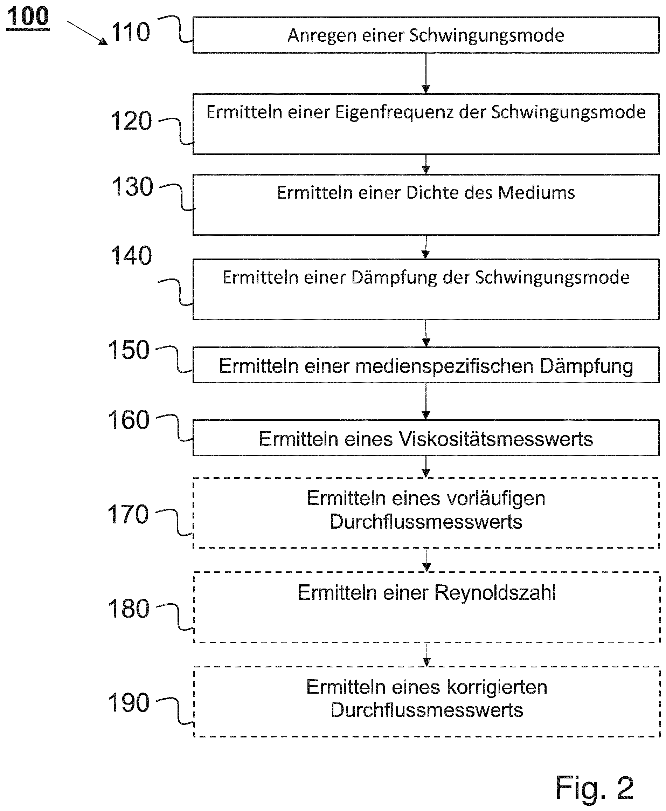

Die Durchführung eines Ausführungsbeispiels 100 des erfindungsgemäßen Verfahrens wird nun anhand von Fig. 2 erläutert. Das Verfahren kann beispielsweise mit einem Coriolis-Massedurchflussmessaufnehmer durchgeführt werden und beginnt mit dem Erfassen der für die Viskositätsermittlung erforderlichen Eingangsgrößen. Dazu erfolgt in einem ersten Schritt 110 das Anregen mindestens einer Schwingungsmode des Messrohrs oder Messrohrpaars des Messaufnehmers, dies kann beispielsweise eine Biegeschwingungsnutzmode sein oder eine Torsionsmode eines geraden Messrohrs. In einem zweiten Schritt 120 erfolgt das Ermitteln einer Eigenfrequenz der Schwingungsmode. Auf Basis der Eigenfrequenz folgt in einem nächsten Schritt 130 Ermitteln der Dichte des Mediums.

In die Ermittlung der Dichte gehen weiterhin die Temperaturen eines Trägerrohres und des Messrohres des Messgerätes ein, um den temperaturabhängigen Elastizitätsmodul zu berechnen und thermisch induzierte mechanische Spannungen zu berücksichtigen.

In einem weiteren Schritt 140 erfolgt die Bestimmung der Dämpfung der Schwingungsmode. Diese ergibt sich beispielsweise aus dem Verhältnis von Erregerstrom zum Aufrechterhalten der Schwingung in der Schwingungsmode und der damit erzielten Schwingungsamplitude oder aus dem Abklingverhalten der Schwingungsamplitude nach Abschalten der Erregerleistung.

In die Ermittlung der Dämpfung gehen weiterhin die Temperaturen und ggf. des Trägerrohres und des Messrohres des Messgerätes ein, um die Temperaturabhängigkeit des Wirkungsgrads des Erregers und der Empfindlichkeit der Sensoren zu kompensieren.

In einem nächsten Schritt 150 erfolgt die Ermittlung der medienspezifischen Dämpfung. Hierbei wird ein Dämpfungsgrundwert von der ermittelten Dämpfung subtrahiert, wobei der Dämpfungsgrundwert medientypspezifisch bzw. stoffgruppenspezifisch ist. Schließlich erfolgt in einem Schritt 160 die Ermittlung des Viskositätsmesswerts, wobei insbesondere die Schritte 150 zur Ermittlung der medienspezifischen Dämpfung und 160 zur Ermittlung des Viskositätsmesswerts in die Auswertung einer Übertragungsfunktion integriert sein können, beispielsweise der Übertragungsfunktion gemäß Gleichung II. Auf diese Weise wird der relative Messfehler bei der Viskositätsmessung gegenüber dem Stand der Technik erheblich reduziert.

Der Viskositätsmesswert kann ausgegeben werden bzw. als Hilfsgröße zur Bestimmung anderer Messgrößen herangezogen werden, wie beispielsweise zur Korrektur eines Durchflussmesswerts in Abhängigkeit von der Reynoldszahl, wie in EP 1 281 938 B1 für eine Massedurchflussrate beschrieben ist. Insofern als die vorliegende Erfindung eine genaueren Viskositätsmesswert bereitstellt, kann damit auch eine genauere Reynoldszahl ermittelt werden, was schließlich eine genauere Korrektur des Durchflussmesswerts ermöglicht.

Diese Vorgehensweise ist durch optionale Verfahrensschritte in Fig. 2 dargestellt, wobei zunächst in einem ersten Schritt 170 das Ermitteln eines vorläufigen Durchflussmesswerts mit einem Durchflussmessaufnehmer erfolgt. Im nächsten Schritt 180 erfolgt das Ermitteln der Reynoldszahl auf Basis des vorläufigen Durchflussmesswerts, der Dichte, des Viskositätsmesswerts und einer charakteristischen Größe des Durchflussmessaufnehmers, beispielsweise eines Mesrohrdurchmesser des Durchflussmessaufnehmers, In einem letzten Schritt 190 erfolgt die Ermittlung eines korrigierten Durchflussmesswerts nach den in EP 1 281 938 B1 beschriebenen Prinzipien.

Der Durchflussmessaufnehmer kann der gleiche Messaufnehmer sein, der auch zur Ermittlung des Viskositätsmesswerts verwendet wird, dies ist aber nicht zwingend erforderlich. Gleichermaßen kann die Korrektur eines mit einem anderen Messprinzip ermittelten vorläufigen Durchflussmesswerts erfolgen, beispielsweise mit einem Ultraschall-Durchflussmessaufnehmer oder einem Magnetisch-Induktiven Messaufnehmer.

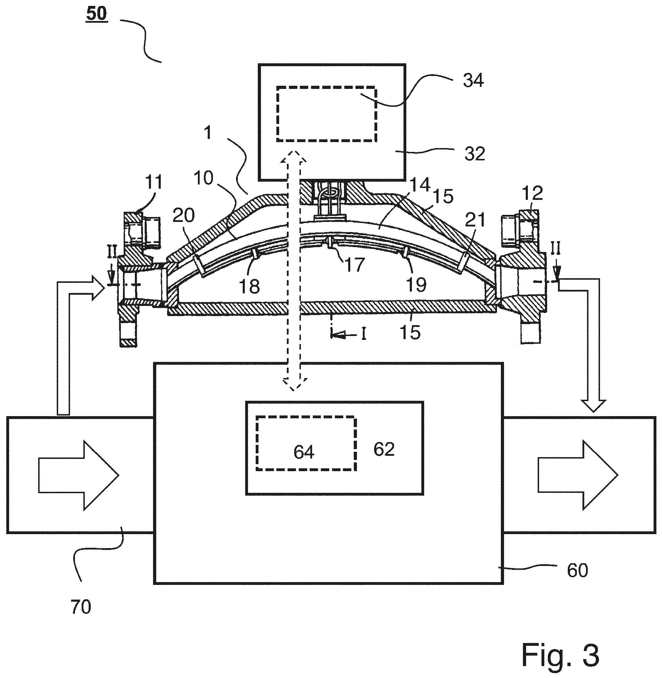

Das in Fig. 3 dargestellte, Ausführungsbeispiel einer erfindungsgemäßen Messstelle 50 umfasst einen Coriolis-Massedurchflussmessaufnehmer 1, welcher als Ausführungsbeispiel eines erfindungsgemäßen Messgeräts ausgebildet ist, also eingerichtet ist, das erfindungsgemäße Verfahren durchzuführen und einen Viskositätsmesswert zu ermitteln. Der Coriolis-Massedurchflussmessaufnehmer 1 umfasst einen Oszillator 10 der ein Paar von parallel geführten schwingfähigen Messrohren 14 umfasst, die sich zwischen einem einlassseitigen Flansch 11 und einem auslassseitigen Flansch 12 erstrecken, wobei die Flansche jeweils einen Strömungsteiler bzw. Sammler umfassen, in den die Messrohre 14 münden. Die Strömungsteiler sind durch ein starres Gehäuse 15 miteinander verbunden, so dass Schwingungen der die Messrohre aufnehmenden Strömungsteiler im Bereich von Schwingungsfrequenzen von Biegeschwingungsnutzmoden des Oszillators wirksam unterdrückt sind. Die Messrohre 10 sind mit einer einlassseitigen Knotenplatte 20 und einer auslassseitigen Knotenplatte 21 starr verbunden, wobei die Knotenplatten Schwingungsknoten des durch die beiden der Messrohre 14 gebildeten Oszillators 10 definieren, und damit den Bereich möglicher Frequenzen der Biegeschwingungsnutzmode weitgehend festlegen. Der Oszillator 10 wird mit einem zwischen den beiden Messrohren 14 wirkenden elektrodynamischen Erregers 17 zum Schwingen angeregt, wobei die Schwingungen mittels zweier Relativbewegungen der Messrohre 14 zueinander erfassender elektrodynamischer Schwingungssensoren 18, 19 detektiert werden. Der Erreger 17 wird von einer ersten Betriebs- und Auswerteschaltung 30 mit einer ersten Recheneinheit 32 betrieben, wobei die Betriebs- und Auswerteschaltung dazu eingerichtet ist, das erfindungsgemäße Verfahren durchzuführen. Die Messstelle umfasst weiterhin eine Rohrleitung 70, deren Nennweite hier ein Vielfaches der Nennweite des Coriolis-Massedurchflussmessaufnehmers 1 beträgt. Der Coriolis-Masseduchflussmessaufnehmer ist im Bypass angeordnet, und zwar parallel zu einem in der Rohrleitung angeordneten Durchflussmessgerät 60, beispielsweise einem Ultraschall-Durchflussmessgerät 60. Das Ultraschall-Durchflussmessgerät 60 weist eine zweite Betriebs- und Auswerteschaltung 62 mit einer zweiten Recheneinheit 64 zum Betreiben des Ultraschall-Durchflussmessgeräts auf. Die zweite Recheneinheit 64 ist zum Datenaustausch mit der ersten Recheneinheit 34 verbunden. Die zweite Recheneinheit 64 ist dazu eingerichtet, einen vorläufigen Durchflussmesswert zu ermitteln und auf Basis der von der ersten Recheneinheit 34 bereitgestellten Werte für Dichte und Viskosität einen hinsichtlich der Reynoldszahl korrigierten Durchflussmesswert bereitzustellen.

Selbstverständlich kann auch die erste Recheneinheit 34 des Coriois- Massedurchflussmessaufnehmers 1 dazu eingerichtet sein einen hinsichtlich der Reynoldszahl korrigierten Durchflussmesswert bereitzustellen, sei es auf Basis eines von einem anderen Durchflussmessgerät ermittelten vorläufigen Durchflussmesswerts oder auf Basis eines mit dem Coriois- Massedurchflussmessaufnehmer 1 ermittelten vorläufigen Durchflussmesswerts.

## Patentansprüche

1. Verfahren (100) zum Bestimmen eines Viskositätsmesswerts ($\eta$) eines in einem schwingfähigen Messrohr geführten Mediums; umfassend:

   Anregen mindestens einer Schwingungsmode (110) des Messrohrs;
   Ermitteln einer Eigenfrequenz (120) der Schwingungsmode;
   Ermitteln der Dichte (130) des Mediums auf Basis der Eigenfrequenz;
   Ermitteln der Dämpfung (140) der Schwingungsmode;
   Ermitteln des Viskositätsmesswerts (160) in Abhängigkeit von der Dichte, der Eigenfrequenz und der Dämpfung der Schwingungsmode,
   **dadurch gekennzeichnet, dass**
   der Viskositätsmesswert ($\eta$) in Abhängigkeit von einer Spezifizierung der Art des Mediums mit einem der Spezifizierung entsprechenden Modell ermittelt wird,
   die Spezifizierung die Zuordnung des Mediums zu einer Stoffgruppe umfasst, wobei das Modell ein erstes stoffgruppenspezifisches Modell und ein zweites stoffgruppenspezifisches umfasst, und
   bei gegebener Dichte, Eigenfrequenz und Dämpfung die mit einem ersten Modell für eine erste Stoffgruppe ermittelten Viskositätsmesswerte ($\eta$) um mindestens 20%, insbesondere um mindestens 40% größer sind als die mit einem zweiten Modell ermittelten Viskositätsmesswerte ($\eta$) für eine zweite Stoffgruppe, wenn die mit dem zweiten Modell ermittelten Viskositätsmesswerte ($\eta$) nicht mehr als 10 cP betragen.

2. Verfahren nach Anspruch 1, wobei das erste Modell und das zweite Modell jeweils eine Übertragungsfunktion aufweisen, wobei die erste und die zweite Übertragungsfunktion jeweils einen Grunddämpfungsterm ($A0_1$, $A0_2$) aufweisen, wobei die ermittelte Dämpfung mit dem Grunddämpfungsterm zu korrigieren ist, um einen medienspezifischen Dämpfungswert zu ermitteln, wobei sich ein erster Grunddämpfungsterm für die erste Übertragungsfunktion von einem zweiten Grunddämpfungsterm für die zweite Übertragungsfunktion unterscheidet.

3. Verfahren nach Anspruch 2, wobei die erste Übertragungsfunktion für das erste Modell einen ersten Empfindlichkeitsfaktor ($A_{11}$) aufweist, der von einem zweiten Empfindlichkeitsfaktor ($A_{12}$) der zweiten Übertragungsfunktion für das zweite Modell abweicht, wobei der ermittelte Viskositätsmesswert ($\eta$) jeweils proportional ist zu dem Empfindlichkeitsfaktor.

4. Verfahren nach Anspruch 3, wobei der ermittelte Viskositätsmesswert vom Quadrat des medienspezifischen Dämpfungswerts abhängt und insbesondere proportional ist zum Quadrat des medienspezifischen Dämpfungswerts.

5. Verfahren nach Anspruch 3 oder 4, wobei der Grunddämpfungsterm ein Produkt eines Grunddämpfungsfaktors $A_{0i}$ und eines Dichtekorrekturterms aufweist, wobei der Grunddämpfungsfaktor $A_{0i}$ der ersten Übertragungsfunktion von dem Grunddämpfungsfaktor der zweiten Übertragungsfunktion abweicht.

6. Verfahren nach Anspruch 5, wobei der Dichtekorrekturterm eine Funktion einer Abweichung der ermittelten Dichte des Mediums von einer Referenzdichte aufweist.

7. Verfahren nach Anspruch 5 oder 6, wobei der Dichtekorrekturterm für beide Modelle identisch ist.

8. Verfahren nach einem der Ansprüche 2 bis 7, wobei die mit den Übertragungsfunktionen ermittelten stoffgruppenspezifischen Viskositätsmesswerte für Viskositäten zwischen 90 cP und 110 cP um nicht mehr als 10% von Kontrollviskositätsmesswerten abweichen, die mit den folgenden stoffgruppenspezifischen Kontrollübertragungsfunktionen ermittelt sind, und wobei die mit den Übertragungsfunktionen ermittelten stoffgruppenspezifischen Viskositätsmesswerte für Viskositäten zwischen 1 cP und 90 cP um nicht mehr als 50% von Kontrollviskositätsmesswerten abweichen, die mit den folgenden stoffgruppenspezifischen Kontrollübertragungsfunktionen ermittelt sind:

$$\eta = \frac{A_{1i}}{f^3 \, \rho} \Big( D - A_{0i} \left( 1 - A_{2i} \left( \rho - \rho_{ref} \right) \right) \Big)^2$$

wobei $A_{0i}$ der stoffgruppenabhängiger Grunddämpfungsfaktor ist, der sich zwischen der ersten und zweiten Kontrollübertragungsfunktion unterscheidet,
wobei $A_{1i}$ der stoffgruppenabhängige Empfindlichkeitsfaktor ist, der sich zwischen der ersten Kontrollübertragungsfunktion und der zweiten Kontrollübertragungsfunktion unterscheidet,
wobei $A_{2i}$ ein Gewichtungsfaktor ist, um einen Einfluss der Dichte auf die Dämpfung zu modellieren, wobei $\rho$ die bestimmte Dichte des Mediums und $\rho_{ref}$ eine Referenzdichte sind,
wobei D die ermittelte Dämpfung ist, und
wobei f die Frequenz der angeregten Biegeschwingungsmode bezeichnet.

9. Verfahren nach Anspruch 8, wobei $\rho_{ref}$ für beide Kontrollübertragungsfunktionen gleich ist.

10. Verfahren nach Anspruch 8 oder 9, wobei $A_{2i}$ für beide Kontrollübertragungsfunktionen gleich ist.

11. Messgerät (1) zum Bestimmen eines Viskositätsmesswerts eines Mediums, umfassend:

einen Messaufnehmer mit einem schwingfähigen Messrohr (14) zum Führen des Mediums, einem Erreger (17) zum Anregen mindestens einer Schwingungsmode des Messrohrs (14) und einem Schwingungssensor (18, 19) zum Erfassen der Messrohrschwingungen; und
eine Mess- und Betriebsschaltung (32) mit einer Recheneinheit (34) zum Treiben des Erregers (17) und zum Erfassen von Signalen des Schwingungssensors (18, 19);
**dadurch gekennzeichnet, dass** die Mess- und Betriebsschaltung (32) dazu eingerichtet ist, das Verfahren (100) nach einem der vorhergehenden Ansprüche mit dem Messgerät (1) durchzuführen.

**12.** Verfahren zum Ermitteln eines Durchflussmesswerts eines strömenden Mediums, umfassend:

Ermitteln eines vorläufigen Durchflussmesswerts (170);
Ermitteln eines Viskositätsmesswerts (160) des Mediums mittels des Verfahrens nach einem der Ansprüche 1 bis 10;
Ermitteln einer Reynoldszahl (180) des Mediums auf Basis des vorläufigen Durchflussmesswerts, des Dichtemesswerts, und des Viskositätsmesswerts; und
Ermitteln eines mit der Reynoldszahl korrigierten Durchflussmesswerts (190) auf Basis des vorläufigen Durchflussmesswerts und der Reynoldszahl.

**13.** Messstelle (50) zum Ermitteln eines Durchflussmesswerts eines strömenden Mediums mittels des Verfahrens nach Anspruch 12, umfassend:

ein Durchflussmessgerät (60) zum Ermitteln eines vorläufigen Durchflussmesswerts und
ein Messgerät (1) nach Anspruch 11, welche miteinander funktionell verbunden sind, um
die erforderlichen Messwerte zur Durchführung des Verfahrens auszutauschen.

**14.** Coriolis-Massedurchflussmessgerät (1), umfassend:

mindestens ein Messrohr (14) zum Führen eines Mediums;
mindestens einen Erreger (17) zum Anregen mindestens einer Schwingungsmode des Messrohrs;
mindestens zwei Schwingungssensoren (18, 19) zum Erfassen von Messrohrschwingungen und einer durchflussabhängigen Verformung einer Schwingungsmode;
eine Mess- und Betriebsschaltung (32) mit einer Recheneinheit (34), die dazu eingerichtet, die Verfahren gemäß Anspruch 1-10 und 12 mit dem Coriolis-Massedurchflussmessgerät (1) durchzuführen.

**Claims**

**1.** A method (100) for determining a measured viscosity value ($\eta$) of a medium conducted in a measuring tube that can oscillate; comprising:

Initiating at least one oscillation mode (110) of the measuring tube;
Determining a natural frequency (120) of the oscillation mode;
Determining the density (130) of the medium based on the natural frequency; Determining the damping (140) of the oscillation mode;
Determining the measured viscosity value (160) as a function of the density, the natural frequency, and the damping of the oscillation mode,
**characterized in that**
the measured viscosity value ($\eta$) is determined as a function of a specification of the type of medium with a model corresponding to the specification,
the specification comprises the allocation of the medium to a substance group, wherein the model comprises a first substance group-specific model and a second substance group-specific model, and
with a given density, natural frequency, and damping, the measured viscosity values ($\eta$) determined with a first model for a first substance group are at least 20%, in particular at least 40%, greater than the measured viscosity values ($\eta$) determined with a second model for a second substance group, if the measured viscosity values ($\eta$) determined with the second model are not more than 10 cP.

**2.** The method as claimed in claim 1, wherein the first model and the second model each have a transfer function, wherein the first and the second transfer functions each have a basic damping term ($A0_1$, $A0_2$), wherein the determined damping is to be corrected with the basic damping term in order to determine a media-specific damping value, wherein a first basic damping term for the first transfer function differs from a second basic damping term for the second transfer function.

**3.** The method as claimed in claim 2, wherein the first transfer function has a first sensitivity factor ($A_{11}$) for the first model, which differs from a second sensitivity factor ($A_{12}$) of the second transfer function for the second model, wherein the determined measured viscosity value ($\eta$) is proportional to each sensitivity factor.

4. The method as claimed in claim 3, wherein the determined measured viscosity value depends on the square of the media-specific damping value and, in particular, is proportional to the square of the media-specific damping value.

5. The method as claimed in claim 3 or 4, wherein the basic damping term has a product of a basic damping factor $A_{0i}$ and a density correction term, wherein the basic damping factor $A_{0i}$ of the first transfer function differs from the basic damping factor of the second transfer function.

6. The method as claimed in claim 5, wherein the density correction term has a function of a deviation of the determined density of the medium from a reference density.

7. The method as claimed in claim 5 or 6, wherein the density correction term is identical for both models.

8. The method as claimed in one of claims 2 to 7, wherein the substance group-specific measured viscosity values determined with the transfer functions for viscosities between 90 cP and 110 cP do not differ by more than 10% from control measured viscosity values which are determined using the following substance group-specific control transfer functions, and wherein the substance group-specific measured viscosity values determined with the transfer functions for viscosities between 1 cP and 90 cP do not differ by more than 50% from control measured viscosity values which are determined using the following substance group-specific control transfer functions:

$$\eta = \frac{A_{1i}}{f^3 \rho} \left( D - A_{0i} \left( 1 - A_{2i} \left( \rho - \rho_{ref} \right) \right) \right)^2$$

wherein $A_{0i}$ is the substance group-dependent basic damping factor, which is different for the first and second control transfer functions,
wherein $A_{1i}$ is the substance group-dependent sensitivity factor, which is different for the first control transfer function and the second control transfer function,
wherein $A_{2i}$ is a weighting factor in order to model an effect of the density on the damping, wherein p is the determined density of the medium and $\rho_{ref}$ is a reference density,
wherein D is the determined damping, and
wherein f designates the frequency of the initiated bending oscillation mode.

9. The method as claimed in claim 8, wherein $\rho_{ref}$ is the same for both control transfer functions.

10. The method as claimed in claim 8 or 9, wherein $A_{2i}$ is the same for both control transfer functions.

11. A measuring device (1) for determining a measured viscosity value of a medium, comprising:

A sensor with a measuring tube (14) that can oscillate for conducting the medium, an exciter (17) for initiating at least one oscillation mode of the measuring tube (14), and an oscillation sensor (18, 19) for detecting the measuring tube oscillations; and
A measuring and operating circuit (32) with a calculation unit (34) for driving the exciter (17) and for detecting signals from the oscillation sensor (18, 19);
**characterized in that** the measuring and operating circuit (32) is configured to perform the method (100) as claimed in one of the preceding claims with the measuring device (1).

12. A method for determining a measured flow value of a flowing medium, comprising:

Determining a provisional measured flow value (170);
Determining a measured viscosity value (160) of the medium using the method as claimed in one of claims 1 to 10;
Determining a Reynolds number (180) of the medium based on the provisional measured flow value, the measured density value, and the measured viscosity value; and
Determining a measured flow value (190) corrected with the Reynolds number based on the provisional measured flow value and the Reynolds number.

13. A measuring point (50) for determining a measured flow value of a flowing medium using the method as claimed in claim 12, comprising:

A flowmeter (60) for determining a provisional measured flow value and
a measuring device (1) as claimed in claim 11, which are functionally connected to each other in order to exchange the required measured values for performing the method.

14. A Coriolis mass flow meter (1), comprising: At least one measuring tube (14) for conducting a medium;

At least one exciter (17) for initiating at least one oscillation mode of the measuring tube;
At least two oscillation sensors (18, 19) for detecting measuring tube oscillations and a flow-dependent displacement of an oscillation mode;
A measuring and operating circuit (32) with a calculation unit (34) which is configured to perform the method as claimed in claims 1 to 10 and 12 with the Coriolis mass flow meter (1).

**Revendications**

1. Procédé (100) destiné à la détermination d'une valeur mesurée de viscosité ($\eta$) d'un produit guidé dans un tube de mesure apte à vibrer ; lequel procédé comprend les étapes suivantes :

Excitation d'au moins un mode de vibration (110) du tube de mesure ;
Détermination d'une fréquence propre (120) du mode de vibration ;
Détermination de la densité (130) du produit sur la base de la fréquence propre ;
Détermination de l'amortissement (140) du mode de vibration ;
Détermination de la valeur mesurée de viscosité (160) en fonction de la densité, de la fréquence propre et de l'amortissement du mode de vibration,
**caractérisé en ce que**
la valeur mesurée de viscosité (n) est déterminée en fonction d'une spécification du type de produit avec un modèle correspondant à la spécification,
la spécification comprend l'affectation du produit à un groupe de produits, le modèle comprenant un premier modèle spécifique au groupe de produits et un deuxième modèle spécifique au groupe de produits, et
pour une densité, une fréquence propre et un amortissement donnés, les valeurs mesurées de viscosité ($\eta$) déterminées avec un premier modèle pour un premier groupe de produit sont supérieures d'au moins 20 %, notamment d'au moins 40 %, aux valeurs mesurées de viscosité ($\eta$) déterminées avec un deuxième modèle pour un deuxième groupe de produits, lorsque les valeurs mesurées de viscosité ($\eta$) déterminées avec le deuxième modèle ne sont pas supérieures à 10 cP.

2. Procédé selon la revendication 1, pour lequel le premier modèle et le deuxième modèle présentent chacun une fonction de transfert, la première et la deuxième fonction de transfert présentant chacune un terme d'amortissement de base ($AO_1$, $AO_2$), l'amortissement déterminé devant être corrigé avec le terme d'amortissement de base pour déterminer une valeur d'amortissement spécifique au produit, un premier terme d'amortissement de base pour la première fonction de transfert se distinguant d'un deuxième terme d'amortissement de base pour la deuxième fonction de transfert.

3. Procédé selon la revendication 2, pour lequel la première fonction de transfert pour le premier modèle présente un premier facteur de sensibilité ($A_{11}$) qui diffère d'un deuxième facteur de sensibilité ($A_{12}$) de la deuxième fonction de transfert pour le deuxième modèle, la valeur mesurée de viscosité ($\eta$) déterminée étant respectivement proportionnelle au facteur de sensibilité.

4. Procédé selon la revendication 3, pour lequel la valeur mesurée de viscosité déterminée dépend du carré de la valeur d'amortissement spécifique au produit et est notamment proportionnelle au carré de la valeur d'amortissement spécifique au produit.

5. Procédé selon la revendication 3 ou 4, pour lequel le terme d'amortissement de base comprend un produit d'un facteur d'amortissement de base $A_{oi}$ et d'un terme de correction de densité, le facteur d'amortissement de base $A_{oi}$ de la première fonction de transfert étant différent du facteur d'amortissement de base de la deuxième fonction de transfert.

6. Procédé selon la revendication 5, pour lequel le terme de correction de densité comprend une fonction d'un écart de la densité déterminée du produit par rapport à une densité de référence.

7. Procédé selon la revendication 5 ou 6, pour lequel le terme de correction de densité est identique pour les deux modèles.

8. Procédé selon l'une des revendications 2 à 7,

pour lequel les valeurs mesurées de viscosité - spécifiques aux groupes de produits - déterminées avec les fonctions de transfert pour des viscosités entre 90 cP et 110 cP, ne s'écartent pas de plus de 10 % des valeurs mesurées de viscosité de contrôle déterminées avec les fonctions de transfert de contrôle - spécifiques aux groupes de produits - suivantes, et
pour lequel les valeurs mesurées de viscosité - spécifiques aux groupes de produits - déterminées avec les fonctions de transfert pour des viscosités entre 1 cP et 90 cP, ne s'écartent pas de plus de 50 % des valeurs mesurées de viscosité de contrôle déterminées avec les fonctions de transfert de contrôle - spécifiques aux groupes de produits - suivantes :

$$\eta = \frac{A_{1i}}{f^3\,\rho}\left(D - A_{0i}\left(1 - A_{2i}\left(\rho - \rho_{ref}\right)\right)\right)^2$$

$A_{0i}$ étant le facteur d'amortissement de base dépendant du groupe de produits, lequel facteur diffère entre la première et la deuxième fonction de transfert de contrôle,
$A_{1i}$ étant le facteur de sensibilité dépendant du groupe de produits, lequel facteur diffère entre la première fonction de transfert de contrôle et la deuxième fonction de transfert de contrôle,
$A_{2i}$ étant un facteur de pondération pour modéliser une influence de la densité sur l'amortissement, $\rho$ étant la densité déterminée du produit et $\rho_{ref}$ une densité de référence,
$D$ étant l'amortissement déterminé, et
$f$ étant la fréquence du mode de vibration de flexion excité.

9. Procédé selon la revendication 8, pour lequel $\rho_{ref}$ est identique pour les deux fonctions de transfert de contrôle.

10. Procédé selon la revendication 8 ou 9, pour lequel $A_{2i}$ est identique pour les deux fonctions de transfert de contrôle.

11. Appareil de mesure (1) destiné à la détermination d'une valeur mesurée de viscosité d'un produit, lequel appareil comprend :

un capteur de mesure avec un tube de mesure apte à vibrer (14), lequel tube est destiné à guider le produit, un excitateur (17) destiné à exciter au moins un mode de vibration du tube de mesure (14) et un capteur de vibrations (18, 19) destiné à mesurer les vibrations du tube de mesure ; et
un circuit de mesure et de fonctionnement (32) avec une unité de calcul (34) ; lequel circuit est destiné à entraîner l'excitateur (17) et à mesurer les signaux du capteur de vibrations (18, 19) ;
**caractérisé en ce que** le circuit de mesure et de fonctionnement (32) est conçu pour mettre en œuvre le procédé (100) selon l'une des revendications précédentes avec l'appareil de mesure (1).

12. Procédé destiné à la détermination d'une valeur mesurée de débit d'un produit en écoulement, lequel procédé comprend les étapes suivantes :

Détermination d'une valeur mesurée de débit préliminaire (170) ;
Détermination d'une valeur mesurée de viscosité (160) du produit au moyen du procédé selon l'une des revendications 1 à 10 ;
Détermination d'un nombre de Reynolds (180) du produit sur la base de la valeur mesurée de débit préliminaire, de la valeur mesurée de densité et de la valeur mesurée de viscosité ; et
Détermination d'une valeur mesurée de débit (190) corrigée avec le nombre de Reynolds sur la base de la valeur mesurée de débit préliminaire et du nombre de Reynolds.

13. Point de mesure (50) destiné à la détermination d'une valeur mesurée de débit d'un produit en écoulement au moyen du procédé selon la revendication 12, lequel point de mesure comprend :

un débitmètre (60) destiné à déterminer une valeur mesurée de débit préliminaire, et
un appareil de mesure (1) selon la revendication 11,

le débitmètre et l'appareil étant reliés entre eux de manière fonctionnelle pour échanger les valeurs mesurées nécessaires à la mise en œuvre du procédé.

14. Débitmètre massique Coriolis (1) comprenant :

au moins un tube de mesure (14) destiné à guider un produit ;
au moins un excitateur (17) destiné à exciter au moins un mode de vibration du tube de mesure ;
au moins deux capteurs de vibrations (18, 19) destinés à mesurer les vibrations du tube de mesure et une déformation d'un mode de vibration en fonction du débit ;
un circuit de mesure et de fonctionnement (32) avec une unité de calcul (34), lequel circuit est conçu pour exécuter les procédés selon les revendications 1 à 10 et 12 avec le débitmètre massique Coriolis (1).

Fig. 1

**100**  ⟶ 110

| 110 | Anregen einer Schwingungsmode |

| 120 | Ermitteln einer Eigenfrequenz der Schwingungsmode |

| 130 | Ermitteln einer Dichte des Mediums |

| 140 | Ermitteln einer Dämpfung der Schwingungsmode |

| 150 | Ermitteln einer medienspezifischen Dämpfung |

| 160 | Ermitteln eines Viskositätsmesswerts |

| 170 | Ermitteln eines vorläufigen Durchflussmesswerts |

| 180 | Ermitteln einer Reynoldszahl |

| 190 | Ermitteln eines korrigierten Durchflussmesswerts |

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7059176 B2
- DE 10020606 A1
- DE 102017116515 A1
- US 20050229719 A1
- WO 2018208301 A1
- WO 2020108910 A1
- WO 2005095901 A
- EP 1281938 B1